## Europäisches Patentamt
## European Patent Office
## Office européen des brevets

(19)

(11) Veröffentlichungsnummer: **0 293 474**
**A1**

# EUROPÄISCHE PATENTANMELDUNG

Veröffentlicht nach Art. 158 Abs. 3 EPÜ

(21) Anmeldenummer: **87900734.2**

(22) Anmeldetag: **13.11.86**

Daten der zugrundeliegenden internationalen Anmeldung:

(86) Internationale Anmeldenummer:
**PCT/SU86/00115**

(87) Internationale Veröffentlichungsnummer:
**WO88/03616 (19.05.88 88/11)**

(51) Int. Cl.³: **F 16 F 1/18**

(43) Veröffentlichungstag der Anmeldung:
**07.12.88 Patentblatt 88/49**

(84) Benannte Vertragsstaaten:
**DE FR GB IT SE**

(71) Anmelder: **KIEVSKY INZHENERNO-STROITELNY INSTITUT**
**Vozdukhoflotsky pr., 31**
**Kiev 252037(SU)**

(72) Erfinder: **ZAMITTER, Mikhail Naumovich**
**ul. Aviatsii, 2/32-4-18**
**Kiev, 252043(SU)**

(74) Vertreter: **Nix, Frank Arnold, Dr.**
**Kröckelbergstrasse 15**
**D-6200 Wiesbaden(DE)**

(54) **BLATTFEDER.**

(57) Die Plattenfeder von M. N. Samitter ist aus einer elastischen Platte (1) ausgeführt, die einen mittleren Abschnitt (2) und über ihre einen Enden mit demselben verbundene Randabschnitte (3, 4) enthält, welche eine relativ zueinander verschiedene Länge (S, $S_1$) besitzen. An den anderen Enden der Randabschnitte (3, 4) sind jeweilige Aufnahmen (7, 8) für Elemente von Gelenkverbindungen der Plattenfeder vorgesehen, deren Längsachsen (9, 10) zur Lageebene der neutralen Linie (11) der elastischen Platte (1) senkrecht sind, welche durch die Schwerpunkte (15, 1?) der Querschnittsebenen (5, 6) der letzteren geht.

FIG.1

Croydon Printing Company Ltd.

EP 0 293 474 A1

# PLATTENFEDER VON M.N.SAMITTER

## Technisches Gebiet

Die vorliegende Erfindung bezieht sich auf die Konstruktion von elastischen Elementen, genauer auf Plattenfedern.

## Zugrundeliegender Stand der Technik

Zur Zeit wächst angesichts der zunehmenden Zahl von Transportmitteln und einer Erweiterung ihrer Vielfalt die Bedeutung einer Erweiterung der Funktionsmöglichkeiten von in den Fahrzeugaufhängungen vorhandenen elastischen Vorrichtungen, beispielsweise Plattenfedern.

Bekannt ist eine Plattenfeder von M.N.Samitter (siehe z.B. den SU-Urheberschein Nr. 1040244, Klasse F 16 F 1/18, 1980), die aus einer elastischen Platte mit über die Länge veränderlichen linearen Querschnittsmaßen ausgeführt ist, die einen mittleren Abschnitt und mit diesem über ihre einen Enden verbundene Randabschnitte enthält, an deren anderen Enden aber Aufnahmen für Elemente von Gelenkverbindungen der Plattenfeder vorgesehen sind, deren Achsen zur Ebene der neutralen Linie der elastischen Platte senkrecht sind, welche durch die Schwerpunkte der Querschnitte der letzteren geht. Bei dieser Plattenfeder weisen die Randabschnitte der elastischen Platte die gleiche Länge auf.

In manchen Fällen aber, beispielsweise in der Aufhängung der Vorderachse eines Lkws, ist die erforderliche Länge der Randabschnitte der elastischen Platte vom Karosserieboden begrenzt, und die erforderliche Gesamtlänge der Plattenfeder ist von in deren Nähe liegenden Einzelteilen des Fahrgestells begrenzt, d.h. durch die Anordnungsbedingungen in bezug auf die benachbarten Konstruktionsteile eingeschränkt, was die Funktionsmöglichkeiten dieser Plattenfeder einengt. Eine blosse Verminderung der Länge der Randabschnitte der elastischen Platte bzw. der Gesamtlänge der Plattenfeder führt aber zur Abnahme ihrer Nachgiebigkeit.

- 2 -

### Offenbarung der Erfindung

Der Erfindung liegt die Aufgabe zugrunde, eine Plattenfeder von M.N.Samitter zu schaffen, die aus einer elastischen Platte ausgeführt ist, bei der ihre Randabschnitte relativ zueinander eine solche Länge besitzen würden, die eine Erweiterung ihrer Funktionsmöglichkeiten bei gleichzeitiger Erhöhung der relativen Plattenfedernachgiebigkeit ermöglichen würde.

Dies ist dadurch erreicht, dass in der Plattenfeder von M.N.Samitter, die aus einer elastischen Platte mit über die Länge veränderlichen linearen Maßen ihrer Querschnitte ausgeführt ist, welche Platte einen mittleren Abschnitt und mit diesem über ihre einen Enden verbundene Randabschnitte enthält, an deren anderen Enden Aufnahmen für Elemente von Gelenkverbindungen der Plattenfeder vorgesehen sind, deren Längsachsen zur Lageebene der neutralen Linie der elastischen Platte senkrecht sind, welche durch die Schwerpunkte der Querschnittsebene der letzteren geht, erfindungsgemäss die Randabschnitte der elastischen Platte eine relativ zueinander verschiedenen Länge aufweisen.

Zweckmässigerweise sind in der Plattenfeder von M.N.Samitter die Enden der Randabschnitte der elastischen Platte, an denen Aufnahmen für Elemente von Gelenkverbindungen der Plattenfeder ausgeführt sind, solcherweise angeordnet, dass die geometrische Verbindungslinie der Mittelpunkte der für Elemente von Gelenkverbindungen der Plattenfeder bestimmten Aufnahmen unter einem bestimmten Winkel zu jenem Teil der neutralen Linie der elastischen Platte liegt, der längs des mittleren Abschnitts derselben verläuft.

Es empfiehlt sich, dass der Winkel, unter dem die geometrische Verbindungslinie der Mittelpunkte der für Elemente von Gelenkverbindungen der Plattenfeder bestimmten Aufnahmen relativ zu jenem Teil der neutralen Linie der elastischen Platten verläuft, der längs des mittleren Abschnitts derselben verläuft, weniger als 90° beträgt.

Es ist sinnvoll, dass die Enden der Randabschnitte der elastischen Platte, an denen Aufnahmen für Elemente von Gelenkverbindungen der Plattenfeder ausgeführt sind, solcherweise angeordnet sind, dass die Abstände von den Längsachsen der für Elemente von Gelenkverbindungen der Plattenfeder bestimmten Aufnahmen bis zu den Schwerpunkten der Verbindungsebenen ihres mittleren Abschnittes mit den jeweiligen Randabschnitten einander gleich sind.

Zweckmässig ist ferner, dass die Enden der Randabschnitte der elastischen Platte, an denen Aufnahmen für Elemente von Gelenkverbindungen der Plattenfeder ausgeführt sind, solcherweise angeordnet sind, dass der Abstand von der Längsachse einer Aufnahme für Elemente von Gelenkverbindungen der Plattenfeder im Randabschnitt grösserer Länge bis zum Schwerpunkt der Verbindungsebene ihres mittleren Abschnittes mit diesem Randabschnitt kleiner bzw. grösser als der Abstand von der Längsachse einer Aufnahme für Elemente von Gelenkverbindungen der Plattenfeder im Randabschnitt kleinerer Länge bis zur Schwerpunkt der Verbindungsebene ihres mittleren Abschnittes mit diesem Randabschnitt wäre.

Die vorliegende Erfindung ermöglicht es, die Plattenfeder in einem Transportmittel je nach Abmessung und Zweckbestimmung innerhalb eines Volumens anzubringen, dessen Grösse begrenzt ist, was die Funktionsmöglichkeiten der Plattenfeder ohne Abnahme ihrer Nachgiebigkeit erweitert.

Darüber hinaus gestattet es die vorliegende Erfindung, bei einer vorgegebenen Belastung das Verhältnis der Längsverformung der Plattenfeder zur Längsabmessung derselben zu erhöhen, was die relative Nachgiebigkeit der Plattenfeder vergrössert.

Kurze Beschreibung der Zeichnungen

Im folgenden wird die vorliegende Erfindung in einer Beschreibung konkreter Ausführungsbeispiele derselben und anhand von beigefügten Zeichnungen näher erläutert, in diesen zeigt:

Fig. 1 die Gesamtansicht der Plattenfeder, gemäss der Erfindung;

Fig. 2 den Schnitt in Richtung der Linie II-II von Fig. 1 mit willkürlicher Darstellung einer Aufnahme für Elemente von Gelenkverbindungen der Plattenfeder am Ende eines Randabschnittes der elastischen Platte kleinerer Länge;

Fig. 3 den Schnitt in Richtung der Linie III-III von Fig. 1 mit willkürlicher Darstellung einer Aufnahme für Elemente von Gelenkverbindungen der Plattenfeder am Ende eines Randabschnittes der elastischen Platte grösserer Länge;

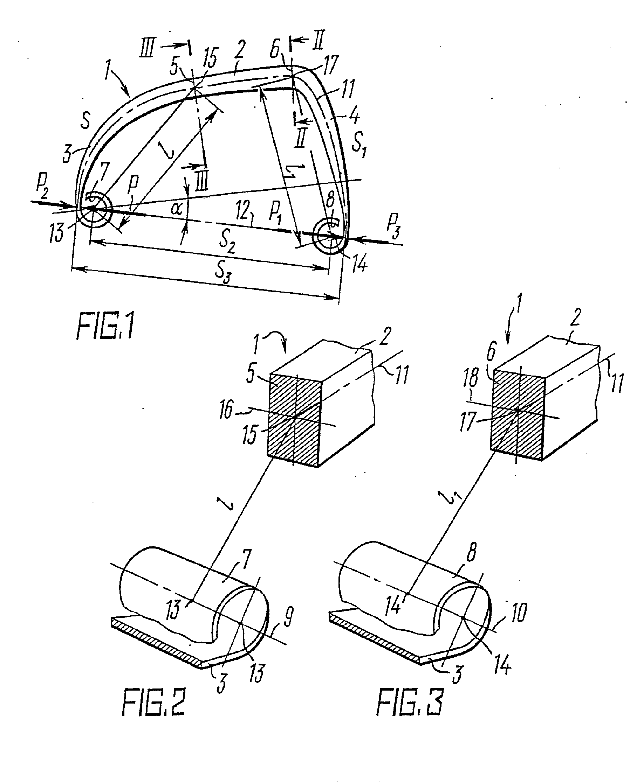

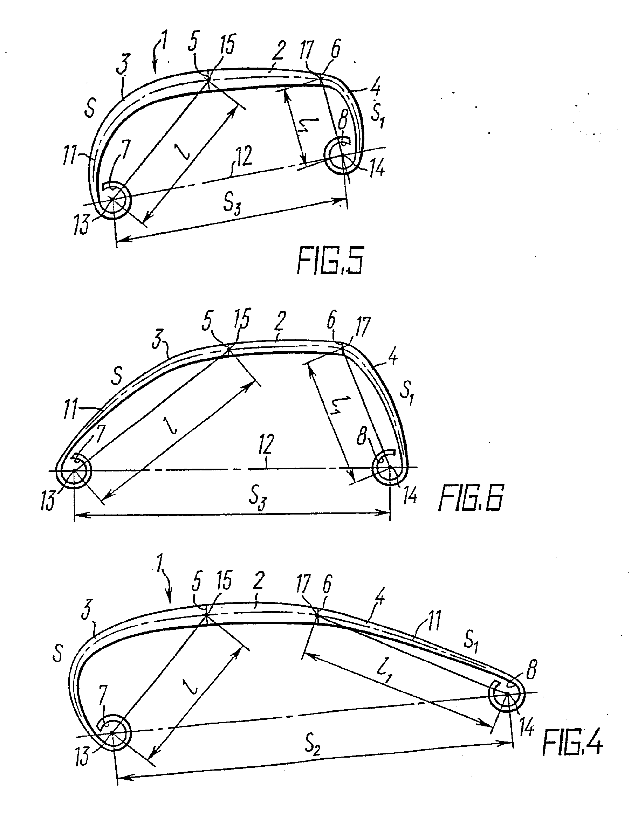

Fig. 4 die Gesamtansicht der Plattenfeder von Fig. 1 in dem Fall, wo der Abstand vom Mittelpunkt einer Aufnahme für Elemente von Gelenkverbindungen der Plattenfeder im Randabschnitt grösserer Länge bis zum Schnittpunkt der neutralen Linie der elastischen Platte mit der neutralen Achse des Querschnittes der elastischen Platte in der Verbindungsebene ihres mittleren Abschnittes mit diesem Randabschnitt kleiner ist als der Abstand vom Mittelpunkt einer Aufnahme für Elemente von Gelenkverbindungen der Plattenfeder im Randabschnitt kleinerer Länge bis zum Schnittpunkt der neutralen Linie der elastischen Platte in der Verbindungsebene ihres mittleren Abschnittes mit diesem Randabschnitt, gemäss der Erfindung;

Fig. 5 die Gesamtansicht der Plattenfeder von Fig. 1 in dem Fall, wo der Abstand vom Mittelpunkt einer Aufnahme für Elemente von Gelenkverbindungen der Plattenfeder im Randabschnitt grösserer Länge bis zum Schnittpunkt der neutralen Linie der elastischen Platte mit der neutralen Achse des Querschnittes der elastischen Platte in der Verbindungsebene ihres mittleren Abschnittes mit diesem Randabschnitt grösser ist als der Abstand vom Mittelpunkt einer Aufnahme für Elemente von Gelenkverbindungen der Plattenfeder bis zum Schnittpunkt der neutralen Linie der elastischen Platte in der Verbindungsebene ihres mittleren Abschnittes mit diesem Randabschnitt, gemäss der Erfindung;

Fig. 6 die Gesamtansicht der Plattenfeder von Fig. 5 in dem Fall, wo die geometrische Linie zwischen den Mittelpunkten der Aufnahmen für Verbindungselemente zur neutralen Linie der elastischen Platte parallel ist;

Fig. 7 eine schematische Darstellung der Plattenfeder im Augenblick einer unter der Wirkung von Zugkräften erfolgenden Verformung, gemäss der Erfindung;

Fig. 8 eine schematische Darstellung der Plattenfeder im Augenblick einer unter der Wirkung von Druckkräften erfolgenden Verformung, gemäss der Erfindung.

Beste Ausführungsform der Erfindung

Die Plattenfeder ist aus einer elastischen Platte 1 (Fig. 1) ausgeführt, die einen mittleren Abschnitt 2 enthält, mit dem die einen Enden von Randabschnitten 3 und 4 in jeweiligen Verbindungsebenen 5, 6 verbunden sind. Die Länge S des Abschnittes 3 ist grösser als die Länge $S_1$ des Abschnittes 4. An den anderen Enden der Abschnitte 3, 4 sind jeweilige Aufnahmen 7,8 für Elemente von Gelenkverbindungen der Plattenfeder (in der Zeichnung nicht abgebildet) ausgeführt. Eine Längsachse 9 (Fig. 2) der Aufnahme 7 und eine Längsachse 10 (Fig. 3) der Aufnahme 8 sind zur Lageebene der neutralen Linie 11 der Platte 1 senkrecht, die durch die Schwerpunkte ihrer Querschnittsebenen geht. Eine geometrische Verbindungslinie 12 (Fig. 1) mit einer Länge $S_2$ zwischen Mittelpunkten 13, 14 der jeweiligen Aufnahmen 7, 8 liegt unter einem Winkel $\alpha$ kleiner als 90°, d.h. also $\alpha < 90°$, zu jenem Teil der neutralen Linie 11, der längs des mittleren Abschnitts 2 verläuft. Der Abstand 1 von der Längsachse 9 der Aufnahme 7 bis zum Schnittpunkt 15 (Fig. 2) der neutralen Linie 11 mit der neutralen Achse 16 des Querschnittes der Platte 1 in der Verbindungsebene 5 der Abschnitte 2 und 3 (er ist zugleich der Schwerpunkt 15 der Ebene 5) ist dem Abstand $1_1$ (Fig. 1) von der Längsachse 10 der Aufnahme 8 bis zum Schnittpunkt 17 (Fig. 3) der neutralen Achse 18 des Querschnittes der Platte 1 in der Verbindungsebene 6 der Abschnitte 2 und 4 (er ist zugleich der Schwerpunkt 17 der Ebene 6) gleich. Die neutrale Linie geht durch die Schwerpunkte 15, 17 der jeweiligen Ebene 5,6. In Fig. 1 sind Vektoren von Zugkräften P und $P_1$, die nach den zueinander entgegengesetzten Seiten gerichtet sind, sowie Vektoren von Druckkräften $P_2$ und $P_3$ dargestellt, die entlang der Linie 12 gegeneinander gerichtet sind und durch die Mittelpunkte 13, 14 der jeweiligen Aufnahmen 7, 8 gehen, gezeigt. Der Abstand $S_3$ zwischen den Enden der neutralen Linie 11 wird als Arbeitsspannweite der Plattenfeder bezeichnet.

Gemäss einer weiteren Ausführungsform der Plattenfeder ist der Abstand l von der Längsachse 9 (Fig. 1, 2, 4) der Aufnahme 7 bis zum Mittelpunkt 15 in der Ebene 5 kleiner als der Abstand $l_1$ von der Längsachse 10 (Fig. 1, 3, 4) der Aufnahme 8 bis zum Mittelpunkt 17 in der Ebene 6, d.h. $l < l_1$ (Fig. 4). Im übrigen ist die Konstruktion der Plattenfeder der vorstehend beschriebenen ähnlich.

Gemäss noch einer Ausführungsorm der Plattenfeder ist der Abstand l von der Achse 9 (Fig. 1, 2, 5) der Aufnahme 7 bis zum Mittelpunkt 15 in der Ebene 5 grösser als der Abstand $l_1$ von der Achse 10 (Fig. 1, 3, 5) der Aufnahme 8 bis zum Mittelpunkt 17 in der Ebene 6, d.h. $l > l_1$ (Fig. 5). Im übrigen ist die Konstruktion der Plattenfeder der vorstehend beschriebenen ähnlich.

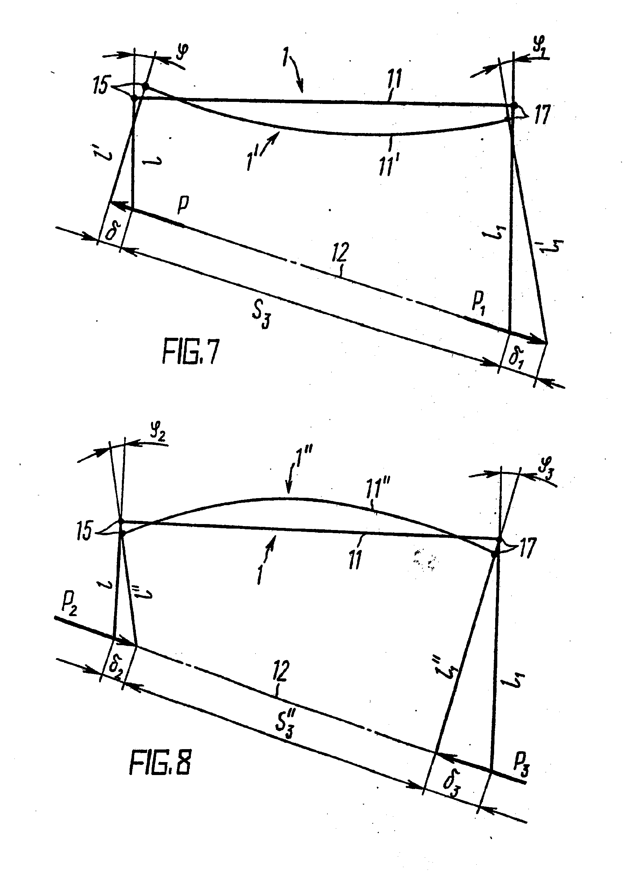

Gemäss einer letzten Ausführungsform der Plattenfeder ist bei $l > l_1$ (Fig. 5) die geometrische Verbindungslinie 12 (Fig. 6) zwischen den Mittelpunkten 13, 14 der Aufnahmen 7, 8 zu jenem Teil der neutralen Linie 11 parallel, der durch den mittleren Abschnitt 2 der Platte 1 geht. Im übrigen ist die Konstruktion der Plattenfeder der in Fig. 5 abgebildeten Konstruktion ähnlich.

Die Plattenfeder von M.N.Samitter gemäss Fig. 1, 2, 3 arbeitet folgendermassen.

Unter der Wirkung von Zugkräften P und $P_1$ bewegen

sich die Randabschnitte 3, 4 der Platte 1 um jeweilige (in Fig. 7 dargestellte) Verformungslängen $\delta$ und $\delta_1$ auseinander. Hierbei verbiegt sich der mittlere Abschnitt 2 der Platte 1 derart, dass ihre neutrale Linie 11 mit deren Konvexität gegen die geometrische Linie 12 gekehrt ist. Die Länge $S_2$ der Linie 12 und die Arbeitsspannweite $S_3$ nehmen dabei um den Durchbiegungsbetrag f der Plattenfeder zu, der ausmacht:

$$f \simeq \delta + \delta_1$$

Unter der Wirkung von Druckkräften $P_2$ und $P_3$ nähern sich die Randabschnitte 3, 4 der Platte 1 um jeweilige (in Fig. 8 dargestellte) Verformungslängen $\delta_2$ und $\delta_3$ einander. Hierbei verbiegt sich der Abschnitt 2 derart, dass seine neutrale Linie 11 von der geometrischen Linie weggeht. Die Arbeitsspannweite $S_3$ und die Länge $S_2$ der Linie 12 nehmen um den Druchbiegungsbetrag $f_1$ ab, der ausmacht:

$$f_1 \simeq \delta_2 + \delta_3.$$

Bei gleichen Absolutbeträgen der Zugkräfte P und $P_1$ und der Druckkräfte $P_2$ und $P_3$ sind die Durchbiegungsbeträge f und $f_1$ ebenfalls einander (ungefähr) gleich, d.h.:

$$f \simeq f_1.$$

Jede der Verformungslängen $\delta$, $\delta_1$, $\delta_2$, $\delta_3$ setzt sich ihrerseits aus den Verformungslängen $\delta_4$ und $\delta_5$ (in der Zeichnung nicht dargestellt) infolge der Eigenbiegung der Abschnitte 3 und 4 und deren Lageänderung zusammen, die durch Drehung der Abschnitte 3, 4, d.h. Drehung der Verbindungsebenen 5 und 6 beim Auseinanderziehen um jeweilige (in Fig. 7 dargestellte) Winkel $\varphi$ und $\varphi_1$, beim Zusammendrücken aber um jeweilige (in Fig. 8 dargestellte) Winkel $\varphi_2$ und $\varphi_3$ bewirkt wird. Demgemäss betragen die Verformungslängen $\delta$ und $\delta_1$ beim Auseinanderziehen:

$$\delta \simeq \delta_4 + \varphi l$$
$$\delta_1 \simeq \delta_5 + \varphi_1 l_1$$

- 8 -

In ähnlicher Weise ermittelt man die Verformungs-
längen $\delta_2$ und $\delta_3$ beim durch Kräfte $P_2$ und $P_3$ bewirk-
ten Zusammendrücken:

$$\delta_2 \simeq \delta_6 + \varphi_2 \, 1$$

$$\delta_3 \simeq \delta_7 + \varphi_3 \, 1_1$$

($\delta_6$ und $\delta_7$ sind in der Zeichnung nicht dargestellt).
Die relative Nachgiebigkeit $\bar{f}$ der Plattenfeder er-
mittelt man anhand des Verhältnisses zwischen dem Durchbiegungsbetrag f und der Länge $S_2$ der Linie 12 bzw.
dem Betrag der Arbeitsspannweite $S_3$, d.h.:

$$\bar{f} = f/S_2 \qquad \text{bzw.} \quad \bar{f} = f/S_3$$

$$\bar{f} = f_1/S_2 \qquad \text{bzw.} \quad \bar{f}_1 = f_1/S_3.$$

Die Differenz zwischen den Längen S und $S_1$ der jewei-
ligen Abschnitte 3, 4, d.h. $S > S_1$ bei $1 = 1_1$, wo 1 den
Abstand vom Mittelpunkt 13 der Aufnahme 7 bis zum Schwerpunkt 15 der Ebene 5 (Fig. 1), $1_1$ aber den Abstand vom
Mittelpunkt 14 der Aufnahme 8 bis zum Mittelpunkt 17
der Ebene 6 (Fig. 1, 3) bedeutet, gestattet es, die
Plattenfeder in Transportmitteln mit begrenztem Volumen
anzubringen. Dadurch wird es möglich, ein und dieselbe
Plattenfeder für verschiedene Anordnungsvolumina (Anordnungsräume) zu verwenden, was ihre Funktionsmöglichkeiten erweitert.
Die Plattenfedern von M.N.Samitter von Fig. 4, 5,
6 arbeiten ähnlich wie vorbeschrieben.
Die Zweckmässigkeit der Wahl der in Fig. 4 darge-
stellten Plattenfeder, wo $1 < 1_1$ oder nach Fig. 5, wo $1 > 1_1$
oder nach Fig. 6, wo $1 > 1_1$ und die geometrische Linie 12
parallel zur neutralen Linie 11 verläuft, wird durch die
Anbringungsbedingungen derselben im Transportmittel bestimmt.
Die vorliegende Erfindung gestattet es, die relative Nachgiebigkeit der Plattenfeder zu erhöhen.

- 9 -

Gewerbliche Verwertbarkeit

Die vorliegende Erfindung kann in den Aufhängungen von Transportmitteln angewendet werden.

PATENTANSPRÜCHE

1. Plattenfeder von M.N. Samitter, die aus einer elastischen Platte mit über die Länge veränderlichen linearen Maßen ihrer Querschnitte ausgeführt ist, welche Platte einen mittleren Abschnitt und mit demselben über ihre einen Enden verbundene Randabschnitte enthält, an deren anderen Enden Aufnahmen für Elemente von Gelenkverbindungen der Plattenfeder vorgesehen sind, deren Längsachsen zur Lageebene der neutralen Linie der elastischen Platte senkrecht sind, welche durch die Schwerpunkte der Querschnittsebenen der letzteren geht, dadurch g e k e n n z e i c h n e t , dass die Randabschnitte (3, 4) der elastischen Platte (1) eine relativ zueinander verschiedene Länge (S, S$_1$) besitzen.

2. Plattenfeder nach Anspruch 1, dadurch g e k e n n z e i c h n e t , dass die Enden der Randabschnitte (3, 4) der elastischen Platte (1), an denen Aufnahmen (7, 8) für Elemente von Gelenkverbindungen der Plattenfeder ausgeführt sind, solcherweise angeordnet sind, das die geometrische Linie (12) der Verbindung der Mittelpunkte (13, 14) der Aufnahmen (7, 8) für Elemente von Gelenkverbindungen der Plattenfeder unter einem Winkel $\alpha$ zu jenem Teil der neutralen Linie (11) der elastischen Platte (1) liegt, der längs des mittleren Abschnitts (2) derselben verläuft.

3. Plattenfeder nach Anspruch 2, dadurch g e k e n n z e i c h n e t , dass der Winkel $\alpha$ , unter dem die geometrische Linie (12) der Verbindung der Mittelpunkte (13, 14) der Aufnahmen (7, 8) für Elemente von Gelenkverbindungen der Plattenfeder relativ zu jenem Teil der neutralen Linie (11) der elastischen Platte (1) liegt, der längs des mittleren Abschnitts (2) derselben verläuft, kleiner als 90° ist.

4. Plattenfeder nach Anspruch 2, dadurch g e k e n n z e i c h n e t , dass die Enden der Randabschnitte (3, 4) der elastischen Platte (1), an denen die Aufnahmen (7, 8) für Elemente von Gelenkverbindungen der Plattenfeder ausgeführt sind, solcherweise angeordnet sind, dass die Abstände (1 und $1_1$) von den Längsachsen (9, 10) der jeweiligen Aufnahmen (7, 8) für Elemente von Gelenkverbindungen der Plattenfeder bis zu den Schwerpunkten (15, 17) der Verbindungsebenen (5, 6) des mittleren Abschnittes (2) derselben mit den jeweiligen Randabschnitten (3, 4) einander gleich sind.

5. Plattenfeder nach Anspruch 2, dadurch g e - k e n n z e i c h n e t, dass die Enden der Randabschnitte (3, 4) der elastischen Platte (1), an denen Aufnahmen (7, 8) für Elemente von Gelenkverbindungen der Plattenfeder ausgeführt sind, solcherweise angeordnet sind, dass der Abstand (1) von der Längsachse (9) der Aufnahme (7) für Elemente von Gelenkverbindungen der Plattenfeder im Randabschnitt (3) grösserer Länge (S) bis zum Schwerpunkt (15) der Verbindungsebene (5) des mittleren Abschnittes (2) derselben mit diesem Randabschnitt (3) kleiner bzw. grösser als der Abstand $1_1$ von der Längsachse (10) der Aufnahme (8) für Elemente von Gelenkverbindungen der Plattenfeder im Randabschnitt (4) kleinerer Länge ($S_1$) bis zum Schwerpunkt (17) der Verbindungsebene (6) des mittleren Abschnittes (2) derselben mit diesem Randabschnitt (4) ist.

M 09·07·88 0293474

FIG.1

FIG.2

FIG.3

0293474

FIG.5

FIG.6

FIG.4

FIG. 7

FIG. 8

## I. CLASSIFICATION OF SUBJECT MATTER (if several classification symbols apply, indicate all)

According to International Patent Classification (IPC) or to both National Classification and IPC

Int.Cl.$^4$: F 16 F 1/18

## II. FIELDS SEARCHED

### Minimum Documentation Searched

| Classification System | Classification Symbols |
|---|---|
| Int.Cl.$^4$: | F 16 F 1/18 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | SU, A1 1004685, (Kievsky ordena Trudovogo Krasnogo Znameni inzhenerno-stroitelny institut), 15 March 1983, see the claims and the figure 1 | 1 |
| A | SU, A1, 1162664, (Kievsky ordena Trudovogo Krasnogo Znameni inzhenerno-stroitelny institut), 23 June 1985, see the claims and figure 2 | 1 |
| A | SU, A1, 1188391, (Vsesojuzny zaochny mashinostroitelny institut), 30 October 1985, see figure 3 | 1,2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 12 May 1987 (12.05.87) | 6 August 1987 (06.08.87) |

| International Searching Authority | Signature of Authorized Officer |
|---|---|
| ISA/SU | |

Form PCT/ISA/210 (second sheet) (January 1985)